(19) Europäisches Patentamt
European Patent Office
Office européen des brevets

(11) **EP 4 506 402 B1**

(12) **EUROPEAN PATENT SPECIFICATION**

(45) Date of publication and mention
of the grant of the patent:
**10.06.2026 Bulletin 2026/24**

(21) Application number: **23872743.2**

(22) Date of filing: **24.07.2023**

(51) International Patent Classification (IPC):
*C08J 11/08* [(2006.01)]      *C08J 11/02* [(2006.01)]
*B29B 17/02* [(2006.01)]      *B29B 17/04* [(2006.01)]

(52) Cooperative Patent Classification (CPC):
**B29B 17/02; C08J 11/08;** B29B 2017/001;
B29B 2017/0293; B29K 2023/00; B29K 2027/06;
B29K 2105/0038; Y02W 30/62

(86) International application number:
**PCT/KR2023/010648**

(87) International publication number:
**WO 2024/071618 (04.04.2024 Gazette 2024/14)**

(54) **METHOD FOR PREPARING RECYCLED POLYMERS**

VERFAHREN ZUR HERSTELLUNG VON REZYKLIERTEN POLYMEREN

PROCÉDÉ DE PRÉPARATION DE POLYMÈRES RECYCLÉS

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **28.09.2022 KR 20220123395
18.07.2023 KR 20230093111**

(43) Date of publication of application:
**12.02.2025 Bulletin 2025/07**

(73) Proprietor: **LG Chem, Ltd.
Yeongdeungpo-gu
Seoul 07336 (KR)**

(72) Inventors:
• **LEE, Sang Ho**
**Daejeon 34122 (KR)**
• **PARK, Jong Suh**
**Daejeon 34122 (KR)**
• **OH, Hyun Taek**
**Daejeon 34122 (KR)**
• **KIM, Do Dam**
**Daejeon 34122 (KR)**
• **KANG, Jue Hyung**
**Daejeon 34122 (KR)**
• **KIM, Jun Sik**
**Daejeon 34122 (KR)**
• **RYU, Jin Sook**
**Daejeon 34122 (KR)**
• **CHA, Seon Cheol**
**Daejeon 34122 (KR)**

(74) Representative: **Goddar, Heinz J.
Boehmert & Boehmert
Anwaltspartnerschaft mbB
Pettenkoferstrasse 22
80336 München (DE)**

(56) References cited:
CN-A- 107 163 283      JP-A- 2022 093 305
JP-A- H06 279 614      JP-A- H1 112 386
JP-B2- 4 468 077      JP-B2- 4 473 225

# Description

[Technical Field]

Technical Field

The present invention relates to a method for preparing a recycled polymer, and more particularly, to a method for recovering a polymer and an additive for recycling the polymer.

[Background Art]

Recently, in accordance with the development of resin materials having physical properties required for various uses and purposes, the use of polymer materials such as a resin and a plastic has increased. In general, using the resin or plastic requires a lot of energy from crude oil extraction to production, and a large amount of carbon is emitted in the process. Furthermore, when the resin or plastic contained in the product is also discarded along with the disposal of the final product, environmental pollution and social costs for its treatment are consumed. Accordingly, recycling of the discarded resin is essential in order to reduce energy consumption, reduce carbon emissions, and prevent environmental pollution. As described above, a plastic prepared by recycling a resin discarded after use by end consumers is called a post-consumer recycled (PCR) resin, and attempts and efforts to obtain a PCR resin having desired purity and physical properties are continuously being made.

Meanwhile, a polyvinyl chloride (PVC) resin has hard or soft characteristics, excellent molding processability, and excellent price competitiveness, and is thus applied to various application fields with general-purpose utility. However, a polyvinyl chloride resin cannot be used alone, but is used in combination with a plasticizer to realize various physical properties such as imparting flexibility to the polyvinyl chloride resin and improving physical properties such as processability.

However, a phthalate-based plasticizer, which has been used as a plasticizer in the past, is harmful to the environment and human body and is highly regulated domestically and internationally. Therefore, when the phthalate-based plasticizer cannot be removed in order to recycle a polymer such as a conventional polyvinyl chloride resin using such a phthalate-based plasticizer, it is difficult to commercialize the phthalate-based plasticizer. Accordingly, recently, attempts have been made to effectively remove the phthalate-based plasticizer remaining in the recovered polymer in order to recycle the polymer using the phthalate-based plasticizer.

As part of this, in order to recover an additive such as a plasticizer in the recovered polymer, a method of dissolving a recovered polymer using a solvent, and then recrystallizing the polymer using an anti-solvent, which is a so-called dissolution recrystallization method, has been mainly used. However, in this case, the amount of the solvent and anti-solvent used for dissolution and recrystallization is excessively large, and physical properties of a recycled polymer are also poor. Furthermore, since the amount of accompanying solvent is large, excessive costs are required for facilities or apparatuses in proportion thereto.

[Related Art Document]

[Patent Document]

Japanese Patent Laid-Open Publication No. 2000-044723

Furthermore, JP H11 12386 A discloses a process wherein plasticiser is extracted from a soft PVC and subsequently the PVC is recovered by dissolution.

**[Disclosure]**

[Technical Problem]

In order to solve the problems mentioned in the background art, an object of the present invention is to provide a method for preparing a recycled polymer by which an additive contained in a recovered polymer is removed with high removal efficiency and at the same time improves operability.

[Technical Solution]

In one general aspect, a method for preparing a recycled polymer includes: bringing a recovered polymer containing an additive into contact with an impregnation solvent in an impregnation tank to obtain a slurry containing a swollen polymer and an eluate; separating the slurry into a solid mixture containing the swollen polymer and a liquid mixture containing the eluate in a solid-liquid separator; and obtaining a recycled polymer from the solid mixture and recovering the additive from the liquid mixture, wherein the impregnation solvent is a mixed solvent in which two or more solvents are mixed.

[Advantageous Effects]

According to the method for preparing a recycled polymer of the present invention, unlike the dissolution recrystallization method according to the related art, it is possible to impregnate the inside of the polymer with an impregnation solvent without dissolving the recovered polymer in a solvent, and to diffuse an additive such as a plasticizer and remove the additive from the polymer. Through this, the amount of the solvent used may be reduced and required apparatuses may be simplified, thereby improving economic efficiency.

In particular, the slurry containing the swollen polymer is separated by a solid-liquid separation method rather than a filter method, such that maintenance of the filter is unnecessary, and as a result, a recycled resin may be continuously prepared.

Further, a solvent system that is suitable for solid-liquid separation and has an improved removal efficiency of an additive in the polymer is employed, such that it is possible to efficiently remove even the additive present inside the polymer, thereby obtaining a high-purity recycled polymer.

[Description of Drawings]

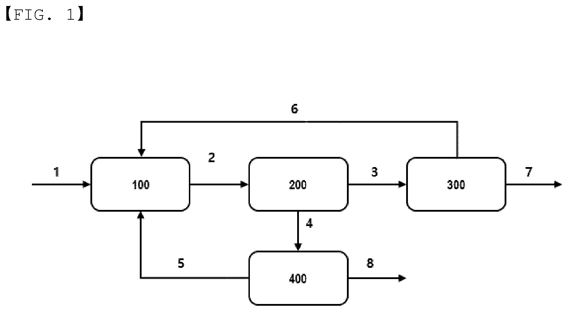

FIG. 1 is a process flow diagram of a method for preparing a recycled polymer according to an embodiment of the present invention.

[Best Mode]

The terms and words used in the description and claims of the present invention are not to be construed limitedly as having general or dictionary meanings but are to be construed as having meanings and concepts meeting the technical ideas of the present invention, based on a principle that the inventors are able to appropriately define the concepts of terms in order to describe their own inventions in the best mode.

Hereinafter, the present invention will be described in more detail with reference to FIG. 1 in order to assist in the understanding of the present invention.

A method for preparing a recycled polymer according to an embodiment of the present invention may include: bringing a recovered polymer containing an additive into contact with an impregnation solvent in an impregnation tank 100 to obtain a slurry containing a swollen polymer and an eluate; separating the slurry into a solid mixture containing the swollen polymer and a liquid mixture containing the eluate in a solid-liquid separator 200; and obtaining a recycled polymer from the solid mixture and recovering the additive from the liquid mixture, wherein the impregnation solvent may be a mixed solvent in which two or more solvents are mixed.

First, the recovered polymer refers to a polymer at a stage before the method for preparing a recycled polymer of the present invention is applied, and may be a polymer in a powder state that has undergone a pre-treatment. That is, the recovered polymer may be a polymer obtained by pretreating a waste resin. The waste resin, whether hard or soft, may be recovered from various products or applications molded using a resin or a composition thereof. In addition, the recovered polymer may be a single type of polymer or may be a resin composition blended with another resin.

Meanwhile, the pre-treatment refers to an entire process of treating the waste resin in a state suitable for applying the method for preparing a recycled polymer of the present invention. For example, the pre-treatment may be a process of treating the waste resin in a powder state by first washing the waste resin with a solvent such as water to remove relatively large foreign substances such as dust, drying the washed waste resin, and then pulverizing the dried waste resin.

Specifically, an average particle diameter (D50) of the recovered polymer may be 100 μm or more, 10 mm or less, or 1 mm or less. As the average particle diameter of the recovered polymer decreases, an impregnation rate of the impregnation solvent increases and thus an additive removal rate increases, but a processing time increases to prepare a recovered polymer having a small average particle diameter.

The recovered polymer may be supplied to the impregnation tank through a recovered polymer supply line 1, and the impregnation solvent may be recovered in a dryer 300 and a purification unit 400 to be described below and then may be re-circulated to the impregnation tank 100 through impregnation solvent circulation lines 5 and 6. In addition, a fresh impregnation solvent may be separately supplied to the impregnation tank 100 in order to supplement the impregnation solvent lost during the process.

Meanwhile, the polymer of the recovered polymer or recycled polymer according to an embodiment of the present invention may be a polyvinyl chloride resin or a polyolefin resin.

The polyvinyl chloride resin may be a homopolymer of a vinyl chloride monomer or a copolymer containing 50% or more of a vinyl chloride monomer and polymerized with another copolymerizable monomer. The other copolymerizable monomer may be one or more selected from the group consisting of acrylic acid, methacrylic acid, alpha-cyanoacrylic acid, methyl acrylate, ethyl acrylate, butyl acrylate, octyl acrylate, cyanoethyl acrylate, vinyl acetate, methyl methacrylate, ethyl methacrylate, butyl methacrylate, acrylonitrile, methacrylonitrile, methyl acrylamide, N-methylol acrylamide, N-butoxy methacrylamide, ethyl vinyl ether, chloroethyl vinyl ether, alpha-methylstyrene, vinyltoluene, chlorostyrene, vinyl naphthalene, vinylidene chloride, vinyl bromide, vinyl chloroacetate, vinyl acetate, vinyl pyridine, and methyl vinyl ketone.

The polyolefin resin may be a copolymer of ethylene and an alpha-olefin. In this case, the alpha-olefin may include propylene, 1-butene, 1-pentene, 4-methyl-1-pentene, 1-hexene, 1-heptene, 1-octene, 1-decene, 1-undecene, 1-dodecene, 1-tetradecene, 1-hexadecene, 1-eicosene, norbornene, norbornadiene, ethylidene norbornene, phenyl norbornene, vinyl norbornene, dicyclopentadiene, 1,4-butadiene, 1,5-pentadiene, 1,6-hexadiene, styrene, alpha-methylstyrene, divinylbenzene, and 3-chloromethylstyrene. Preferably, the polyolefin may be a copolymer of ethylene and 1-butene, a copolymer of ethylene and 1-hexene, or a copolymer of ethylene and 1-octene.

Meanwhile, additives such as a plasticizer, a filler, a flame retardant, a stabilizer, a reinforcement, a foaming agent, a viscosity lowering agent, a colorant, and a heat stabilizer may be used to impart desired physical properties to the resin in a product manufacturing process, such as during the polymerization of the polymer or molding of the polymer after polymerization, and the used additive remains in the polymer prepared according to the additive. Accordingly, the additive may be contained even in a waste resin recovered from the product in order to recycle the resin.

In producing a recycled polymer from a recovered polymer recovered from the waste resin, the reason why the additive needs to be appropriately removed is as follows.

First, in a case where the additive remains in excess, it may be difficult to prepare a recycled polymer having excellent physical properties. Under the influence of the additive, physical property deterioration such as deformation or surface property deterioration of the recycled polymer or color property deterioration such as discoloration may occur.

Second, among these additives, there are additives whose use is regulated due to recent environmental and human hazards. That is, due to regulations that did not exist at the time of product manufacturing, it is becoming increasingly possible to prepare a recycled polymer only when an additive subject to regulation is necessarily removed from a recovered polymer to a level below a desired level.

For the above reasons, an additive that needs to be removed from the recovered polymer containing the additive may be mainly a plasticizer. Specifically, the plasticizer may be a phthalate-based plasticizer. More specifically, the phthalate-based plasticizer may be one or more of dioctyl phthalate, di(2-ethylhexyl)phthalate (DEHP), dibutyl phthalate (DBP), benzyl butyl phthalate (BBP), diisononyl phthalate (DINP), and diisodecyl phthalate (DIDP).

Meanwhile, it is difficult to remove the additive contained in the recovered polymer by the pre-treatment of the waste resin. Therefore, according to the method for preparing a recycled polymer according to an embodiment of the present invention, a slurry containing a swollen polymer and an eluate may be obtained by bringing the recovered polymer containing an additive into contact with the impregnation solvent in the impregnation tank.

Through this, the inside of the polymer is impregnated with the impregnation solvent to diffuse an additive such as a plasticizer without dissolving the recovered polymer in the solvent, such that the additive may be removed from the polymer.

Specifically, the recovered polymer is brought into contact with the impregnation solvent, such that the inside of the polymer may be impregnated with the impregnation solvent, and the polymer may be swollen while maintaining its shape. The additive contained in the polymer may be diffused by the impregnation solvent with which the inside of the polymer is impregnated and eluted out of the recovered polymer. Therefore, the slurry contains the swollen polymer and an eluate containing the additive eluted in the eluted solvent. Meanwhile, as described above, the slurry may not be a polymer solution state in which the recovered polymer is dissolved in the solvent.

This is different from the conventional method of dissolving a polymer itself using a soluble solvent and then recrystallizing the dissolved polymer in that the additive is selectively eluted while maintaining the form of the polymer.

The contact between the recovered polymer and the impregnation solvent in the impregnation tank 100 may be performed for 1 minute to 60 minutes, and specifically, 2 minutes to 30 minutes, and a temperature of the impregnation solvent may be room temperature.

Meanwhile, the contact between the recovered polymer and the impregnation solvent in the impregnation tank 100 may be performed under stirring conditions, and the inside of the recovered polymer may be easily and sufficiently impregnated with the impregnation solvent compared to a case where stirring is not performed under the same type and temperature conditions of the impregnation solvent.

Subsequently, the slurry containing the swollen polymer and the eluate may be separated into a solid mixture containing the swollen polymer and a liquid mixture containing the eluate in the solid-liquid separator 200.

In addition to the swollen polymer, the solid mixture may contain a filler such as $CaCO_3$ and a component that may be contained in a recycled polymer to be prepared. Meanwhile, the liquid mixture may contain the impregnation solvent and the eluate containing an additive that is diffused and eluted into the impregnation solvent.

Specifically, the method for preparing a recycled polymer of the present invention may be a continuous process in which feeds of a recovered polymer and an impregnation solvent are continuously supplied to the impregnation tank, and the recycled polymer from which the additive is removed and the solvent are continuously recovered. In this case, when the swollen polymer and the eluate are separated by a filtration method using a filter or the like, clogging of the filter due to deposition of the swollen polymer occurs after a certain operating time has elapsed, and therefore, the continuous process is restricted due to filter replacement or maintenance. Separation by such a filtration method may be, for example, separation by a centrifugal filter or a vacuum filter.

On the other hand, the separation by the solid-liquid separator of the present invention is not performed by a filtration method, but is separation by a sedimentation method using a difference in density between the solid mixture and the liquid mixture, and not only may realize the continuous process without the operational restrictions due to the clogging of the filter and the like described above, but also may improve reliability of solid-liquid separation by using a unique solvent as an impregnation solvent as described below. Furthermore, loss of the recovered polymer and components such as a filler that are advantageous to recycle may be minimized.

The solid-liquid separator 200 by the sedimentation method may be, for example, a decanter, and specifically, may be a centrifugal decanter. When a slurry is added to the centrifugal decanter and rotation is performed at a high speed, the swollen polymer settles toward the outer wall by a centrifugal force due to the difference in density between the swollen polymer and the eluate to form a sediment layer, and the eluate exists as a separate layer on the sediment layer, such that a separation action may be performed.

Meanwhile, the design of the impregnation solvent according to an embodiment of the present invention has important aspects for the following reasons.

First, in order to separate the swollen polymer and the eluate into a solid and a liquid, the inside of the recovered polymer particle should be impregnated with the impregnation solvent at a high impregnation rate. That is, an impregnation solvent that enables the inside of the particle to be quickly impregnated with the impregnation solvent is preferable even for a recovered polymer having a high particle density or a low porosity.

Second, an impregnation solvent that may implement selective diffusion of the additive contained in the recovered polymer without dissolving the recovered copolymer should be used.

Third, the swollen polymer should be impregnated with an appropriate amount of the impregnation solvent for solid-liquid separation due to the difference in density between the swollen polymer and the eluate. When the swollen polymer is impregnated with an excessive amount of the impregnation solvent, the difference in density between the swollen polymer and the eluate is low, and thus, solid-liquid separation due to the difference in density may be difficult.

In view of the above, the impregnation solvent according to an embodiment of the present invention may be a solvent having a swelling index according to 0.2 to 0.5 of the following General Formula 1.

Swelling index (SP) = (mass of the impregnation solvent in the swollen polymer)/(total mass of the swollen polymer)　　　　[General Formula 1]

In General Formula 1, the mass of the impregnation solvent in the swollen polymer is measured by the following method.

0.2 g of a PVC sample having an average particle diameter (D50) of 150 $\mu$m is added to a 10 ml container, and then 5 g of an impregnation solvent is added to the container. After standing at room temperature for 30 minutes, a liquid and a solid are separated by centrifugation at a rotational speed of 3,000 RPM for 1 minute. A mass of the separated liquid is measured, and then a mass obtained by subtracting the measured mass of the liquid from the mass (5 g) of the impregnation solvent added is used as a mass of the impregnation solvent in the swollen polymer.

Meanwhile, in General Formula 1, the total mass of the swollen polymer is calculated as the sum of the mass of the impregnation solvent and the amount (0.2 g) of the PVC sample.

Specifically, when the swelling index of the impregnation solvent is less than 0.2, since the impregnation rate for the inside of the recovered polymer particle impregnated with the impregnation solvent decreases, it is difficult to uniformly impregnate the inside of the recovered polymer with the impregnation solvent, and thus the plasticizer removal efficiency may be reduced. In addition, a retention time of the slurry in the solid-liquid separator increases, and thus production of a recycled polymer may be reduced.

On the other hand, when the swelling index of the impregnation solvent exceeds 0.5, the swollen polymer is impregnated with an excessive amount of the impregnation solvent, and the difference in density between the swollen polymer and the eluate decreases, and therefore, when a solid-liquid separator is used, separation performance may be reduced. Furthermore, sufficient removal of the solvent may be difficult in a subsequent process of removing the solvent in the swollen polymer.

The impregnation solvent having a swelling index of 0.2 to 0.5 of General Formula 1 may be a single solvent or a mixed solvent.

When the impregnation solvent is a single solvent, the impregnation solvent may be ethyl acetate, chloroform, dimethyl sulfoxide (DMSO), toluene, benzene, cyclohexane, water, or ethanol.

However, the single solvent may be relatively difficult to obtain (that is, expensive), or may be difficult to apply to a process for removing the solvent in the swollen polymer in a subsequent process or for separating the additive and the impregnation solvent from the eluate. Therefore, when first and second impregnation solvents are mixed and a swelling index of the entire mixed solvent is controlled, the requirements for the impregnation solvent described above may be satisfied.

Accordingly, the impregnation solvent may be a mixed solvent of a first impregnation solvent and a second impregnation solvent.

The first impregnation solvent may be one or more of isopropyl alcohol, toluene, cyclohexanol, benzene, cyclohexane, water, methanol, ethanol, propanol, butanol, pentanol, hexane, and dimethyl ether. The first impregnation solvent is a solvent having a relatively low impregnation rate for the inside of the recovered polymer, and may function to increase the difference in density between the swollen polymer and the eluate during solid-liquid separation. In addition, the first impregnation solvent may be a solvent that is easily separated from the swollen polymer through a solvent removal process performed in a subsequent dryer 300 by preventing excessive impregnation of the impregnation solvent. From this point of view, a swelling index of the first impregnation solvent according to General Formula 1 may be 0.01 to 0.2.

The second impregnation solvent may be one or more of acetone, dimethyl formamide, chloroform, ethyl acetate, nitrobenzene, dichloromethane, methyl ethyl ketone, dimethylformamide, tetrahydrofuran, dimethylacetamide, cyclopentanone, and cyclohexanone. The second impregnation solvent is a solvent having a relatively high impregnation rate for the inside of the recovered polymer, and may function as a solvent capable of implementing uniform impregnation of the inside of the recovered polymer particle to swell the recovered polymer and to disperse the plasticizer present inside the recovered polymer particle to a polymer particle region in which the first impregnation solvent is rich. From this point of view, a swelling index of the second impregnation solvent may be 0.5 to 0.99.

Furthermore, considering the removal efficiency of the additive in the recovered polymer and the separation efficiency of the swollen polymer and the eluate by the solid-liquid separator, a mass ratio of the first impregnation solvent and second impregnation solvent in the mixed solvent may be 1:0.1 to 1:10, and specifically, 1:0.5 to 1:3, 1:0.5 to 1:2, or 1:1 to 1:2.

When the mass ratio of the first impregnation solvent and second impregnation solvent is 1:0.1 or more, the inside of the recovered polymer is easily and uniformly impregnated with the mixed solvent, and through this, the removal efficiency of the additive may be improved. Meanwhile, when the mass ratio of the first impregnation solvent and second impregnation solvent is 1:10 or less, it is possible not only to maintain an appropriate difference in density between the swollen polymer and the eluate to enable solid-liquid separation, but also to easily remove the impregnation solvent in the swollen polymer in a subsequent removal process. In particular, when the mass ratio of the first impregnation solvent and second impregnation solvent is 1:1 to 1:2, it is advantageous in removing the additive.

The method for preparing a recycled polymer according to an embodiment of the present invention may include separating a solid mixture containing the swollen polymer and a liquid mixture containing the eluate in the solid-liquid separator, and then obtaining a recycled polymer from the solid mixture and recovering the additive from the liquid mixture.

As described above, in the present invention, since the inside of the polymer is impregnated with the impregnation solvent without dissolving the recovered polymer to diffuse and remove an additive such as a plasticizer from the polymer, a separate polymer precipitation process is not required.

Specifically, the solid mixture may be introduced into the dryer 300 through a dryer supply line 3. In the dryer 300, the impregnation solvent remaining in an impregnation polymer of a solid phase may be removed. The removed impregnation solvent may be re-circulated to the impregnation tank 100, and a recycled polymer may be obtained from the polymer from which the impregnation solvent is removed. The dryer 300 may be, for example, a paddle dryer, a floating bed dryer, a vacuum dryer, or a devolatilization extruder.

On the other hand, the liquid mixture may be supplied to the purification unit 400 through a purification unit supply line 4. The purification unit 400 is an apparatus including one or two or more distillation columns, and separation of the plasticizer and the impregnation solvent contained in the liquid mixture may be performed by the purification unit 400. For example, when the purification unit 400 includes one distillation column, the impregnation solvent may be recovered through the top of the distillation column and the plasticizer may be recovered through the bottom of the distillation column by distillation. The recovered impregnation solvent may be re-circulated to the impregnation tank 100, and the recovered plasticizer may be recycled as an additive in resin production according to its original use. Meanwhile, when it is desired to obtain a high-purity recycled polymer by lowering the content of the additive in the recycled polymer, rather than immediately performing the solvent removal process on the solid mixture, a series of processes of supplying the solid mixture to the impregnation tank again, bringing the solid mixture into contact with the impregnation solvent, and separating a solid and a liquid may be repeated several times.

[Mode for Invention]

Hereinafter, the present invention will be described in more detail by Examples. However, the following Examples are provided for illustrating the present invention. It is apparent to those skilled in the art that various modifications and alterations may be made without departing from the scope and spirit of the present invention, and the scope of the present invention is not limited thereto.

**Example 1**

3 g of a PVC recovered polymer sample (D50: 150 $\mu$m) containing 15.5 wt% of a phthalate-based plasticizer was prepared. 9 g of a solvent in which isopropyl alcohol (IPA) and acetone were mixed at a weight ratio of 1:1 was prepared as an impregnation solvent. The impregnation solvent and the PVC recovered polymer sample were added to an impregnation tank and then stored at room temperature for 30 minutes to impregnate the PVC recovered polymer sample with the impregnation solvent. Thus, a slurry containing a swollen polymer impregnated with the impregnation solvent and an eluate in which the plasticizer was eluted into the impregnation solvent was obtained.
The slurry was centrifuged using a decanter centrifuge to separate a solid mixture and a liquid mixture. Thereafter, the separated solid mixture was added to a paddle dryer and dried to obtain a PVC recycled polymer from which the plasticizer was removed.

**Example 2**

A PVC recycled polymer from which a plasticizer was removed was obtained in the same manner as that of Example 1, except that a solvent in which methyl ethyl ketone (MEK) and isopropyl alcohol (IPA) were mixed at a weight ratio of 1:1 was used as an impregnation solvent.

**Example 3**

A PVC recycled polymer from which a plasticizer was removed was obtained in the same manner as that of Example 1, except that a solvent in which methyl ethyl ketone (MEK) and isopropyl alcohol (IPA) were mixed at a weight ratio of 1:2 was used as an impregnation solvent.

**Example 4**

A PVC recycled polymer from which a plasticizer was removed was obtained in the same manner as that of Example 1, except that a solvent in which methyl ethyl ketone (MEK) and isopropyl alcohol (IPA) were mixed at a weight ratio of 1:3 was used as an impregnation solvent.

**Example 5**

A PVC recycled polymer from which a plasticizer was removed was obtained in the same manner as that of Example 1, except that a solvent in which methyl ethyl ketone (MEK) and isopropyl alcohol (IPA) were mixed at a weight ratio of 1:4 was used as an impregnation solvent.

**Example 6**

A PVC recycled polymer from which a plasticizer was removed was obtained in the same manner as that of Example 1, except that a solvent in which methyl ethyl ketone (MEK) and isopropyl alcohol (IPA) were mixed at a weight ratio of 2:1 was used as an impregnation solvent.

**Example 7**

A PVC recycled polymer from which a plasticizer was removed was obtained in the same manner as that of Example 1, except that a solvent in which methyl ethyl ketone (MEK) and isopropyl alcohol (IPA) were mixed at a weight ratio of 2.5:1 was used as an impregnation solvent.

**Example 8**

A PVC recycled polymer from which a plasticizer was removed was obtained in the same manner as that of Example 1, except that a solvent in which tetrahydrofuran (THF) and methanol were mixed at a weight ratio of 1:1 was used as an impregnation solvent.

**Comparative Example 1**

A PVC recycled polymer from which a plasticizer was removed was obtained in the same manner as that of Example 1, except that 9 g of a single solvent of acetone was used as an impregnation solvent.

**Comparative Example 2**

A PVC recycled polymer from which a plasticizer was removed was obtained in the same manner as that of Example 1, except that 9 g of a single solvent of isopropyl alcohol (IPA) was used as an impregnation solvent.

**Comparative Example 3**

A PVC recycled polymer from which a plasticizer was removed was obtained in the same manner as that of Example 1, except that 9 g of a single solvent of toluene was used as an impregnation solvent.

**Experimental Example 1**

The swelling index (SP) of each of the impregnation solvents used in Examples 1 to 8 and Comparative Examples 1 to 3 was measured by the following method.

0.2 g of a PVC sample having an average particle diameter (D50) of 150 $\mu$m was added to a 10 ml container, and then 5 g of each of the impregnation solvents used in Examples 1 to 8 and Comparative Examples 1 to 3 was added to the container. After standing at room temperature for 30 minutes, a liquid and a solid were separated by centrifugation at a rotational speed of 3,000 RPM for 1 minute. A mass of the separated liquid was measured, and then a mass obtained by subtracting the measured mass of the liquid from the mass (5 g) of the impregnation solvent added was used as a mass of the impregnation solvent in the swollen polymer.

Meanwhile, in General Formula 1, the total mass of the swollen polymer was calculated as the sum of the mass of the impregnation solvent and the amount (0.2 g) of the PVC sample.

Based on the mass of the impregnation solvent in the swollen polymer thus obtained and the total mass of the swollen polymer, the swelling index (SP) was calculated according to General Formula 1. The results thereof are shown in Table 1.

**Experimental Example 2**

For each of the PVC recycled polymers prepared in Examples 1 to 8 and Comparative Examples 1 to 3, the content (wt%) of the plasticizer in the polymer was measured. The results thereof are shown in Table 1. Specifically, 50 mg of the sample of each of the PVC recycled polymers prepared in Examples 1 to 8 and Comparative Examples 1 to 3 was weighed and subjected to gas chromatograph flame ionization detection (GC-FID) analysis to calculate the content of the plasticizer in the sample. Here, 7890A GC system available from Agilent Technologies, Inc. was used as a gas chromatograph flame ionization detection (GC-FID) apparatus.

[Table 1]

|  | Used solvent | Mixing ratio | Swelling index (SP) | Residual plasticizer content (wt%) |
|---|---|---|---|---|
| Example 1 | Acetone+IPA | 1:1 | 0.25 | 2.9 |
| Example 2 | MEK+IPA | 1:1 | 0.26 | 3.0 |
| Example 3 | MEK+IPA | 1:2 | 0.2 | 3.4 |
| Example 4 | MEK+IPA | 1:3 | 0.19 | 4.2 |
| Example 5 | MEK+IPA | 1:4 | 0.17 | 4.7 |
| Example 6 | MEK+IPA | 2:1 | 0.4 | 4.8 |
| Example 7 | MEK+IPA | 2.5:1 | 0.45 | 5.6 |
| Example 8 | THF+Methanol | 1:1 | 0.14 | 4.5 |
| Comparative Example 1 | Acetone | - | 0.55 | 7.5 |

(continued)

|  | Used solvent | Mixing ratio | Swelling index (SP) | Residual plasticizer content (wt%) |
|---|---|---|---|---|
| Comparative Example 2 | IPA | - | 0.08 | 8.0 |
| Comparative Example 3 | Toluene | - | 0.24 | 5.8 |

From Table 1, in the cases of Examples 1 to 8 in which acetone or methyl ethyl ketone was used as the first impregnation solvent and isopropyl alcohol was used as the second impregnation solvent, it could be confirmed that the content of the residual plasticizer in the recycled PVC resin was reduced compared to Comparative Examples in which a single solvent was used. Accordingly, in the case where a mixed solvent whose swelling index was controlled was used, the plasticizer efficiency in the resin was excellent compared to the case where a single solvent was used even when the same amount of solvent was used. For example, in the case of Comparative Example 3, the swelling index of the toluene single solvent was excellent, but the plasticizer extraction performance was deteriorated.

Furthermore, even when the mixed solvent was used, it was difficult to control the swelling index of the mixed solvent when the mixing ratio was too large or small. Therefore, it could be confirmed that the content of the residual plasticizer in the recycled PVC resin was rather high.

[Description of Reference Numerals]

100:    Impregnation tank
200:    Solid-liquid separator
300:    Dryer
400:    Purification unit

**Claims**

1.    A method for preparing a recycled polymer, the method comprising:

bringing a recovered polymer containing an additive into contact with an impregnation solvent in an impregnation tank to obtain a slurry containing a swollen polymer and an eluate;
separating the slurry into a solid mixture containing the swollen polymer and a liquid mixture containing the eluate in a solid-liquid separator; and
obtaining a recycled polymer from the solid mixture and recovering the additive from the liquid mixture,
wherein the impregnation solvent is a mixed solvent in which two or more solvents are mixed.

2.    The method of claim 1, wherein the additive is one or more selected from dioctyl phthalate, di(2-ethylhexyl)phthalate, dibutyl phthalate, benzyl butyl phthalate, diisononyl phthalate, and diisodecyl phthalate.

3.    The method of claim 1, wherein the polymer is a polyvinyl chloride resin or a polyolefin resin.

4.    The method of claim 1, wherein the impregnation solvent has a swelling index of 0.2 to 0.5 according to the following General Formula 1:

Swelling index (SP) = (mass of the impregnation solvent in the swollen polymer)/(total mass of the swollen polymer),        [General Formula 1]

wherein the swelling index is measured as described in the description

5.    The method of claim 4, wherein the impregnation solvent is a mixed solvent of a first impregnation solvent and a second impregnation solvent,

the swelling index of the first impregnation solvent is 0.01 to 0.2, and
the swelling index of the second impregnation solvent is 0.5 to 0.99.

6.    The method of claim 1, wherein the impregnation solvent is a mixed solvent of a first impregnation solvent and a second impregnation solvent,

the first impregnation solvent is one or more of isopropyl alcohol, toluene, cyclohexanol, benzene, cyclohexane, water, methanol, ethanol, propanol, butanol, and pentanol, and

the second impregnation solvent is one or more of acetone, dimethyl sulfoxide, chloroform, ethyl acetate, nitrobenzene, dichloromethane, methyl ethyl ketone, dimethylformamide, tetrahydrofuran, dimethylacetamide, cyclopentanone, and cyclohexanone.

7. The method of claim 6, wherein a mass ratio of the first and second impregnation solvents is 1:0.1 to 1:10.

8. The method of claim 7, wherein the mass ratio of the first and second impregnation solvents is 1:0.5 to 1:3.

9. The method of claim 1, wherein the impregnation solvent is a mixed solvent of a first impregnation solvent and a second impregnation solvent,

the first impregnation solvent is isopropyl alcohol, and
the second impregnation solvent is acetone or methyl ethyl ketone.

10. The method of claim 1, wherein the solid-liquid separator is a centrifugal decanter.

11. The method of claim 1, wherein the liquid mixture is supplied to a distillation column to separate the mixed solvent and the additive, and the separated mixed solvent is circulated to the impregnation tank.

**Patentansprüche**

1. Verfahren zur Herstellung eines rezyklierten Polymers, wobei das Verfahren umfasst:

Inkontaktbringen eines gewonnenen Polymers, das ein Additiv enthält, mit einem Imprägnierlösungsmittel in einem Imprägniertank, um eine Aufschlämmung zu erhalten, die ein gequollenes Polymer und ein Eluat enthält; Trennen der Aufschlämmung in eine feste Mischung, die das gequollene Polymer enthält, und eine flüssige Mischung, die das Eluat enthält, in einem Fest-Flüssig-Separator; und Erhalten eines rezyklierten Polymers aus der festen Mischung und Gewinnen des Additivs aus der flüssigen Mischung, wobei das Imprägnierlösungsmittel ein gemischtes Lösungsmittel ist, in dem zwei oder mehr Lösungsmittel gemischt sind.

2. Verfahren nach Anspruch 1, wobei das Additiv eines oder mehrere ist, ausgewählt aus Dioctylphthalat, Di(2-ethylhexyl)phthalat, Dibutylphthalat, Benzylbutylphthalat, Diisononylphthalat und Diisodecylphthalat.

3. Verfahren nach Anspruch 1, wobei das Polymer ein Polyvinylchloridharz oder ein Polyolefinharz ist.

4. Verfahren nach Anspruch 1, wobei das Imprägnierlösungsmittel einen Quellungsindex von 0,2 bis 0,5 gemäß der folgenden allgemeinen Formel 1 aufweist:

Quellungsindex (SP) = (Masse des Imprägnierlösungsmittels in dem gequollenen Polymer)/(Gesamtmasse des gequollenen Polymers),     [Allgemeine Formel 1]

wobei der Quellungsindex wie in der Beschreibung beschrieben gemessen wird.

5. Verfahren nach Anspruch 4, wobei das Imprägnierlösungsmittel ein gemischtes Lösungsmittel aus einem ersten Imprägnierlösungsmittel und einem zweiten Imprägnierlösungsmittel ist,

der Quellungsindex des ersten Imprägnierlösungsmittels 0,01 bis 0,2 beträgt, und
der Quellungsindex des zweiten Imprägnierlösungsmittels 0,5 bis 0,99 beträgt.

6. Verfahren nach Anspruch 1, wobei das Imprägnierlösungsmittel ein gemischtes Lösungsmittel aus einem ersten Imprägnierlösungsmittel und einem zweiten Imprägnierlösungsmittel ist,

**EP 4 506 402 B1**

das erste Imprägnierlösungsmittel eines oder mehrere aus Isopropylalkohol, Toluol, Cyclohexanol, Benzol, Cyclohexan, Wasser, Methanol, Ethanol, Propanol, Butanol und Pentanol ist, und
das zweite Imprägnierlösungsmittel eines oder mehrere aus Aceton, Dimethylsulfoxid, Chloroform, Ethylacetat, Nitrobenzol, Dichlormethan, Methylethylketon, Dimethylformamid, Tetrahydrofuran, Dimethylacetamid, Cyclopentanon und Cyclohexanon ist.

7. Verfahren nach Anspruch 6, wobei ein Massenverhältnis des ersten und des zweiten Imprägnierlösungsmittels 1:0,1 bis 1:10 beträgt.

8. Verfahren nach Anspruch 7, wobei das Massenverhältnis des ersten und des zweiten Imprägnierlösungsmittels 1:0,5 bis 1:3 beträgt.

9. Verfahren nach Anspruch 1, wobei das Imprägnierlösungsmittel ein gemischtes Lösungsmittel aus einem ersten Imprägnierlösungsmittel und einem zweiten Imprägnierlösungsmittel ist,

das erste Imprägnierlösungsmittel Isopropylalkohol ist, und
das zweite Imprägnierlösungsmittel Aceton oder Methylethylketon ist.

10. Verfahren nach Anspruch 1, wobei der Fest-Flüssig-Separator ein Zentrifugaldekanter ist.

11. Verfahren nach Anspruch 1, wobei die flüssige Mischung einer Destillationskolonne zugeführt wird, um das gemischte Lösungsmittel und das Additiv zu trennen, und das getrennte gemischte Lösungsmittel zum Imprägniertank zirkuliert wird.

**Revendications**

1. Procédé de préparation d'un polymère recyclé, le procédé consistant à :

amener un polymère récupéré contenant un additif en contact avec un solvant d'imprégnation dans un réservoir d'imprégnation pour obtenir une suspension épaisse contenant un polymère gonflé et un éluat ;
séparer la suspension épaisse en un mélange solide contenant le polymère gonflé et un mélange liquide contenant l'éluat dans un séparateur solide-liquide ; et
obtenir un polymère recyclé à partir du mélange solide et récupérer l'additif à partir du mélange liquide,
dans lequel le solvant d'imprégnation est un solvant mélangé dans lequel deux solvants ou plus sont mélangés.

2. Procédé selon la revendication 1, dans lequel l'additif est un ou plusieurs éléments sélectionnés parmi le phtalate de dioctyle, le phtalate de di(2-éthylhexyle), le phtalate de dibutyle, le phtalate de benzyle et de butyle, le phtalate de diisononyle et le phtalate de diisodécyle.

3. Procédé selon la revendication 1, dans lequel le polymère est une résine de chlorure de polyvinyle ou une résine de polyoléfine.

4. Procédé selon la revendication 1, dans lequel le solvant d'imprégnation a un indice de gonflement de 0,2 à 0,5 selon la Formule générale 1 ci-après :

Indice de gonflement (SP) = (masse du solvant d'imprégnation dans le polymère gonflé)/ (masse totale du polymère gonflé),   [Formule generale 1]

dans lequel l'indice de gonflement est mesuré comme décrit dans la description.

5. Procédé selon la revendication 4, dans lequel le solvant d'imprégnation est un solvant mélangé d'un premier solvant d'imprégnation et d'un deuxième solvant d'imprégnation,

l'indice de gonflement du premier solvant d'imprégnation est 0,01 à 0,2, et
l'indice de gonflement du deuxième solvant d'imprégnation est 0,5 à 0,99.

6. Procédé selon la revendication 1, dans lequel le solvant d'imprégnation est un solvant mélangé d'un premier solvant

**11**

d'imprégnation et d'un deuxième solvant d'imprégnation,

le premier solvant d'imprégnation est un ou plusieurs éléments parmi l'alcool isopropylique, le toluène, le cyclohexanol, le benzène, le cyclohexane, l'eau, le méthanol, l'éthanol, le propanol, le butanol et le pentanol, et le deuxième solvant d'imprégnation est un ou plusieurs éléments parmi l'acétone, le sulfoxyde de diméthyle, le chloroforme, l'acétate d'éthyle, le nitrobenzène, le dichlorométhane, la méthyléthylcétone, le diméthylformamide, le tétrahydrofurane, le diméthylacétamide, le cyclopentanone et le cyclohexanone.

7. Procédé selon la revendication 6, dans lequel un rapport en masse des premier et deuxième solvants d'imprégnation est 1:0.1 à 1:10.

8. Procédé selon la revendication 7, dans lequel le rapport en masse des premier et deuxième solvants d'imprégnation est 1:0.5 à 1:3.

9. Procédé selon la revendication 1, dans lequel le solvant d'imprégnation est un solvant mélangé d'un premier solvant d'imprégnation et d'un deuxième solvant d'imprégnation,

le premier solvant d'imprégnation est l'alcool isopropylique, et
le deuxième solvant d'imprégnation est l'acétone ou la méthyléthylcétone.

10. Procédé selon la revendication 1, dans lequel le séparateur solide-liquide est un décanteur centrifuge.

11. Procédé selon la revendication 1, dans lequel le mélange liquide est fourni à une colonne de distillation pour séparer le solvant mélangé et l'additif, et le solvant mélangé séparé circule vers le réservoir d'imprégnation.

【FIG. 1】

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000044723 A
- JP H1112386 A